# EUROPEAN PATENT SPECIFICATION

(11) **EP 2 534 919 B1**
(45) Date of publication and mention of the grant of the patent: **03.04.2019**
(21) Application number: 11742421.8
(22) Date of filing: 07.02.2011
(51) Int. Cl.: H04W 74/08, H04W 16/14

(54) **METHOD AND APPARATUS OF REQUESTING CHANNEL ACCESS IN WIRELESS LOCAL AREA NETWORK**
VERFAHREN UND VORRICHTUNG ZUR ANFRAGE EINES KANALZUGANGS IN EINEM WLAN
PROCÉDÉ ET APPAREIL DE DEMANDE D'ACCÈS À UN CANAL DANS UN RÉSEAU LOCAL SANS FIL

(30) Priority: 31.08.2010 KR 20100084795; 18.02.2010 US 305545 P; 10.02.2010 US 303289 P; 09.02.2010 US 302552 P
(43) Date of publication of application: 19.12.2012
(73) Proprietor: LG Electronics Inc., Seoul 150-721 (KR)
(72) Inventor: KIM, Eun Sun, Anyang-si Gyeongki-do 431-749 (KR); SEOK, Yong Ho, Anyang-si Gyeongki-do 431-749 (KR); LEE, Dae Won, Anyang-si Gyeongki-do 431-749 (KR)
(74) Representative: Frenkel, Matthias Alexander
(86) International application number: PCT/KR2011/000777
(87) International publication number: WO 2011/099729

(56) References cited:
- EP-A2- 1 594 261
- EP-A2- 1 931 086
- JP-A- 2009 272 887
- US-A1- 2009 268 674
- "IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications;IEEE Std 802.11-2007 (Revision of IEEE Std", [IEEE STANDARD], IEEE STANDARD, PISCATAWAY, NJ, USA, 12 June 2007 (2007-06-12), pages 1-1076, XP017694813, ISBN: 978-0-7381-5656-9
- MICHELLE GONG (INTEL): "RTS CTS Operation for Wider Bandwidth ; 11-10-1289-02-00ac-rts-cts-operation-for-w ider-bandwidth", IEEE DRAFT; 11-10-1289-02-00AC-RTS-CTS-OPERATION-FOR-W IDER-BANDWIDTH, IEEE-SA MENTOR, PISCATAWAY, NJ USA, vol. 802.11ac, no. 2, 9 November 2010 (2010-11-09), pages 1-17, XP017675923, [retrieved on 2010-11-09]

## Description

### Technical Field

The present invention provides wireless communications, and more particularly, to a method and apparatus for requesting a channel access in a wireless local area network.

### Background Art

With recent development of information and communications technology, various wireless communications technology has been developed. Among them, a wireless local area network (WLAN) is technology that allows portable user equipment such as a personal digital assistant (PDA), a laptop computer, a portable multimedia player (PMP), etc. in a home, an enterprise or a certain service providing zone to have wireless access to high-speed Internet on the basis of radio frequency technology.

It is presupposed that communications in the WLAN based on institute of electrical and electronics engineers (IEEE) 802.11 standards are performed within a zone called a basic service set (BSS). The BSS zone has a somewhat indefinite boundary since it may vary depending on propagating characteristics of a wireless medium. Such a BSS is basically divided into two configurations of an independent BSS (IBSS) and an infrastructure BSS. The former indicates a BSS that forms a self-contained network and does not allows access to a distribution system (DS), and the latter indicates a BSS that includes one or more access points (AP), a distribution system, etc. and generally employs the AP in all communications including communication between stations.

The station (STA) having desire to access a wireless network may use two scanning methods for searching an accessible wireless network (BSS or IBSS), i.e., a candidate AP or the like.

One is passive scanning, which uses a beacon frame transmitted from the AP (or STA). That is, the STA having desire to access a wireless network periodically receives the beacon frames from the AP or the like managing a relevant BSS (or IBSS), thereby finding the accessible BSS or IBSS.

The other is active scanning. The STA having desire to access the wireless network first transmits a probe request frame. Then, the STA or AP that receives the probe request frame responds with a probe response frame.

TV Whitespace includes channels allocated to broadcast TV, which are permitted to be used by cognitive radio device. TV White Space may include UHF band and VHF band. The spectrum (hereinafter, can be called as 'White Space') not used by a licensed device can be used by an unlicensed device. The frequency band permitted to be used by unlicensed device can be differently defined for each country. Generally, this frequency band comprises 54-698 MHz (US, Korea), and some of this frequency band can't be used for the unlicensed device. Here, 'licensed device' means a device of the user permitted in this frequency band, and can be differently called as 'primary user', or 'incumbent user'. The unlicensed device, which wishes to use the TV White Space (TVWS), shall acquire information for available channel list at its location.

An unlicensed device should provide a protection mechanism for the incumbent user. That is, the unlicensed device should stop using a specific channel, when an incumbent user, such as wireless microphone, is using that specific channel. For this purpose, spectrum sensing mechanism is required. Spectrum sensing mechanism comprises Energy Detection scheme, Feature Detection scheme, etc. By using this mechanism, unlicensed device determines that the channel is used by an incumbent user, when the strength of the primary signal is greater than a predetermined level, or when Digital Television (DTV) Preamble is detected. And, the unlicensed device (station or access point) shall lower its transmit power, when it is detected that the neighboring channel, next to the channel used by the unlicensed device, is used by the incumbent user.

On the other hand, in order to efficiently operate the unlicensed device on TVWS, more discussion is needed on an enabling mechanism of letting the unlicensed device to operate in TVWS, how efficiently the unlicensed device finds the network to be connected, how the information for the available channel in TVWS is efficiently acquired, efficient format of that information, and efficient signaling mechanism to exchange this information, etc.

EP 1 594 261 A2 outlines a channel for communicating traffic between two transceivers which is assigned based on the communication of messages between those two transceivers. A first transceiver sends a request message over a plurality of possible communication channels. A second transceiver selects one of the channels over which a request message was received, and responds to the request over the channel selected. The first transceiver then assigns the channel for communicating traffic based on receipt of the response on the selected channel.

EP 1 931 086 A2 outlines aspects of a method and system for coexistence between 20 MHz and 40 MHz overlapping basic service sets (OBSSes) in WLANs. Aspects of a system are described to include a receiving device, such as a WLAN station (STA), which enables reception of an information frame, such as a management frame, via a wireless communication medium. The receiving device may be associated with a wireless network device group, such as a basic service set (BSS). The information frame received by the receiving device is transmitted by a transmitting device, such as a transmitting access point (AP), which is associated with a foreign wireless network device group, for example a foreign BSS. The receiving device is reconfigured to restrict RF channel bandwidth utilized for transmitting and/or receiving signals via the wireless communication medium based on the received information frame.

### Summary of Invention

### Technical Problem

The present invention provides a method and apparatus for requesting a channel access in a wireless local area network.

The present invention also provides a method and apparatus for bandwidth a adaptation in a wireless local area network.

### Solution to Problem

In an aspect, a method of requesting a channel access in a wireless local area network is provided as defined in independent claim 1.

Specific embodiments for the method are provided as defined in dependent claims 2 and 3.

In another aspect, a device configured to request a channel access in a wireless local area network is provided as defined in independent claim 4.

### Advantageous Effects of Invention

By exchanging a RTS frame and CTS frame, bandwidth adaptation is performed. Before accessing channels, channels to minimize interference can be selected.

### Brief Description of Drawings

FIG. 1 shows a wireless local area network(WLAN) system to implement the present
   invention.
FIG. 2 is a flowchart showing a method of regulating transmission power according to an exemplary embodiment of the present invention.
FIG. 3 shows an example of using a channel in a TV WS band.
FIG. 4 shows an example of a WLAN communication according to an exemplary embodiment of the present invention.
FIG. 5 is a flowchart showing a method of requesting a channel access according to an exemplary embodiment of the present invention.
FIG. 6 shows the format of the RTS frame used in the exemplary embodiment of FIG. 5 by way of example.
FIG. 7 shows the format of the CTS frame used in the exemplary embodiment of FIG. 5 by way of example.
FIG. 8 shows a data frame transmitting method according to another exemplary embodiment of the present invention.
FIG. 9 shows a data frame transmitting method according to still another exemplary embodiment of the present invention.
FIGs. 10 and 11 are block diagrams showing the formats of the bandwidth switch request frame and the bandwidth switch response frame.
FIG. 12 is a flowchart showing a bandwidth regulating method according to another exemplary embodiment of the present invention.
FIG. 13 is a block diagram showing the format of the bandwidth switch announcement frame used in the exemplary embodiment of FIG. 12.
FIG. 14 shows an example of bandwidth management information included in the beacon frame.
FIG. 15 shows an example of operation that can be performed in an exemplary embodiment of the present invention.
FIG. 16 shows a format of a PPDU frame in the WLAN, which may refer to a paragraph 17.3.2 of "Part 11: Wireless LAN Medium Access Control (MAC) and Physical Layer (PHY) specifications" in IEEE P802.11-2007.
FIG. 17 shows a method of transmitting a data frame according to an exemplary embodiment of the present invention.
FIG. 18 is a block diagram showing the format of the PPDU frame according to an exemplary embodiment of the present invention.
FIG. 19 is a block diagram of a wireless device to implement the present invention.

### Mode for the Invention

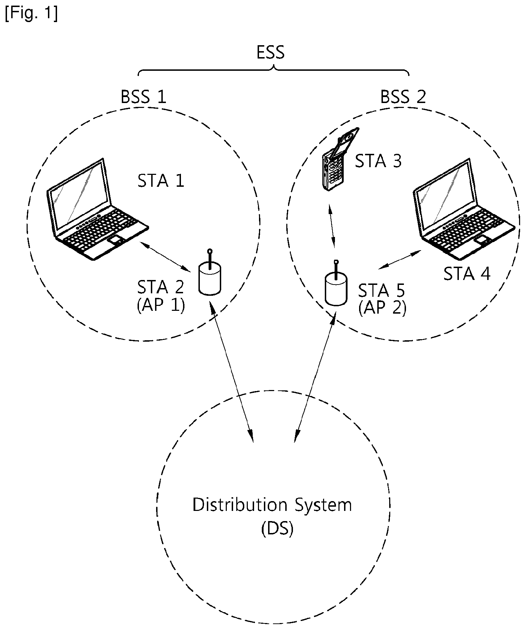

FIG. 1 shows a wireless local area network(WLAN) system to implement the present invention.

Referring to FIG. 1, the WLAN system includes one or more basic service set (BSS). The BSS is a group of stations (STA) which can successfully synchronize and communicate with one another, and does not mean a certain zone.

An infrastructure BSS (BSS1, BSS2) includes one or more non-access point (AP) STAs (non-AP STA1, non-AP STA2, non-AP STA2); APs (AP STA1, AP STA2) providing distribution service; and a distribution system (DS) connecting the plurality of APs (AP STA1, AP STA2). In the infrastructure BSS, the AP manages the non AP STAs.

On the other hand, an independent BSS (IBSS) is a BSS that operates in an Ad-Hoc mode. Since the IBSS does not include the AP, there is no centralized management entity that performs centralized management. That is, in the IBSS, the non-AP STAs are managed in a distributed manner. In the IBSS, all STAs may be provided as mobile STAs and constitute a self-contained network since access to the DS is not allowed.

The STA is a predetermined functional medium having a medium access control (MAC) and a physical layer interface for a wireless medium, based on institute of electrical and electronics engineers (IEEE) 802.11 standards, which broadly includes both the AP and the non-AP STA.

The STA may be clled a mobile terminal, a wireless device, a wireless terminal, a mobile station(MS), a mobile subscriber unit, or the like.

The AP is a functional entity that provides access to the DS via a wireless medium for the STA associated with the AP. In the infrastructure BSS including the AP, communication between the non-AP STAs is basically performed via the AP, but direct communication between the non-AP STAs may be possible if a direct link is set. The AP may be also called a central controller, a base station (BS), a node-B, a base transceiver system (BTS), a cite controller, or the like.

The plurality of infrastructure BSSs may be connected to one another through the distribution system (DS). The plurality of BSSs connected through the DS is called an extended service set (ESS). The STAs included in the ESS can communicate with one another, and the non-AP STAs within one ESS can move from one BSS to another BSS while performing the communication without disconnection.

The DS is a mechanism that enables one AP to communicate with another AP. Through the DS, the AP can transmit a frame for the STAs associated with the BS managed by the AP, transmit a frame when one STA moves to another BSS, or transmit a frame to an external network such as a wired network or the like. The DS is not necessarily a network, but may be achieved without any limitation as long as it can provide predetermined distribution service based on IEEE 802.11. For example, the DS may be a wireless network such as a mesh network, or a physical structure connecting the APs with one another.

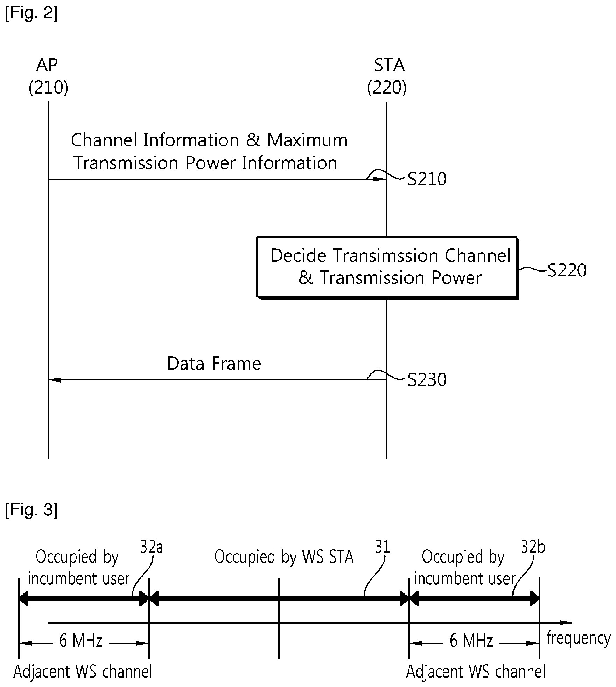

FIG. 2 is a flowchart showing a method of regulating transmission power according to an exemplary embodiment of the present invention.

Referring to FIG. 2, the AP transmits the channel information and the maximum transmission power information to the STA (S210). On the basis of the information received from the AP, the STA determines the transmission channel and transmission power to be used and transmits the data frame to the AP (S220, S230).

The AP transmits information about the channel information and the maximum transmission power to the STA (S210). The channel information indicates an available channel as a channel that can be used by the STA to transmit the frame in the WLAN system. The channel information may indicate a number assigned to the channel or a frequency band used by the corresponding channel. The maximum transmission power information indicates the maximum transmission power available when transmitting the frame in the case where the STA uses the channel indicated by the channel information.

The channel information and the maximum transmission power may be continuously varied depending on frequency band environments. Accordingly, the AP may periodically update the relevant information, and transmit the updated information to the STA again. To update the channel information and the maximum transmission power information, the AP may directly ascertain whether the frequency band is occupied by another WLAN system or heterogeneous communication system. This may be achieved by sensing a signal transmitted from another wireless apparatus. Also, information about the occupied state of the frequency band may be acquired by accessing a database (DB) where the channel information or the maximum transmission power information is periodically updated.

The AP may send the STA a setup frame as an action frame containing the channel information and the maximum transmission power information. Also, the channel information and the maximum transmission power information may be transmitted as being contained in a probe response frame that the AP transmits to the STA in response to a probe request frame in an active scanning procedure.

The STA has to receive the periodically updated channel information and maximum transmission power information. Accordingly, the channel information and maximum transmission power information, transmitted from the AP to the STA, may be transmitted as being included in a beacon frame periodically transmitted from the AP to the STA in the WLAN system.

The STA, which receives the channel information and the maximum transmission power information, selects a certain channel as a transmission channel, and transmits a data frame within a range of a value indicated by the maximum transmission power information (S220, S230).

A master device may transmit the channel information and the maximum transmit power information to wireless devices (which is called as dependent devices). The master device may be an AP or a non-AP STA. The master device selects transmission channels and their maximum transmission powers based on a database.

The transmission channels and the maximum transmission powers may be different depending on the types of STA. Thus, the master device may send the type of service-target STA as well as the channel information and the maximum transmission power information.

A STA may perform sensing with regard to each channel of the TV WS band, or may request other STA to report a sensing result.

If the STA can access a database containing information related to a channel state of the TV WS band, the STA can acquire the channel information without performing spectrum sensing.

The STA grasps the state of each channel through the channel information, and switches to an available channel if a used channel is not available anymore as a licensed user appears. As necessary, the STA may previously set up a preliminary channel to be used when the used channel is not available anymore.

If a certain channel available for the STA is adjacent to a channel being occupied by the licensed user, interference may occur when the STA uses the certain channel.

FIG. 3 shows an example of using a channel in a TV WS band.

In the TV WS, an unlicensed device such as an AP and a STA can generally use about 30 channels each of which has a bandwidth of 6MHz. As a precondition for using these channels, a certain desired channel has not to be occupied by the licensed user.

Suppose that each of channels 32a and 32b being used by the licensed user has a bandwidth of 6MHz. In the conventional IEEE 802.11a standard, since the STA supports at least one of 5MHz, 10MHz and 20MHz, let the AP and the STA have a standard channel bandwidth of 5MHz. Thus, the AP and the STA can support a channel bandwidth of 10MHz or 20MHz by regarding 5MHz as the standard bandwidth, according to how many WS channels are successively unoccupied.

Here, a transmission channel refers to a physical wireless resource that is used by an unlicensed device for transmitting a frame or the like wireless signal in a certain frequency band.

Assume that the STA can use a central band 31 in the TV WS, the licensed user is using both adjacent channels 32a and 32b with regard to the central band 31, and the central band 31 is a bandwidth of the transmission channel.

The STA has to decrease the transmission power of the transmission channel 31 if sensing a signal of the licensed user in the WS channels 32a and 32b adjacent to the transmission channel 31 being used by the STA. This is to reduce the interference with the licensed user. For example, the maximum transmission power of the STA is 100mW, but the maximum transmission power may be limited to 40 through 50mW when the adjacent WS channels 32a and 32b are being used by the licensed user. Because of the above, there is no need of directly associating a broader bandwidth of a transmission channel with a higher throughput in consideration of such transmission power constraint. In some cases, higher transmission power may be more effective instead of using a transmission channel having a relatively narrow bandwidth.

On the other hand, if the bandwidth is broad but the transmission power is low, the coverage is so relatively narrow that the intended receiver such as the WS STA and/or the WS AP cannot receive the frame and thus a hidden node problem may arise. Accordingly, if the intended receiver cannot receive the frame, there is needed a method of retransmitting the frame by increasing the transmission power or a method of transmitting the frame by regulating the proper frequency bandwidth and transmission power in accordance with an communication environment of the intended receiver.

To solve the foregoing problem, there will be proposed below a method of regulating the bandwidth of the transmission channel in accordance with the status of the frequency band available to the AP and/or the STA and whether the transmitted frame is successfully received or not. Further, a constrained value of the transmission power may be regulated in accordance with the bandwidth of the transmission channel.

In the following exemplary embodiment of the present invention, the bandwidths of the transmission channel available to the STA and/or the AP are 5MHz, 10MHz and 20MHz, the normal maximum transmission power is 100mW, and the constrained maximum transmission power is 40mW, but not limited thereto. Also, a condition that the STA transmits a frame to the AP will be described by way of example for the convenience of description. Alternatively, the exemplary embodiment of the present invention may be applied to a condition that the AP transmits a frame to the STA or a condition that a plurality of WS STAs transmits frames in an independent BSS.

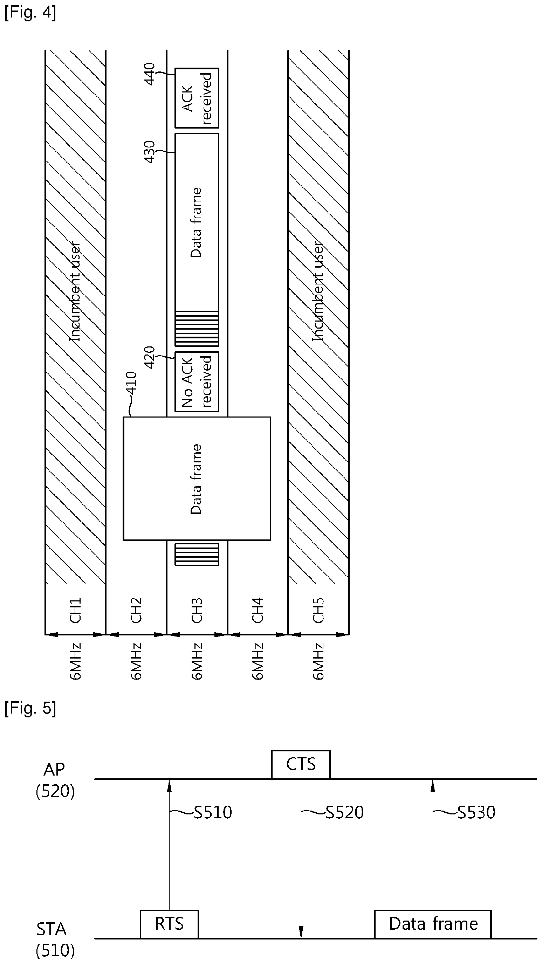

FIG. 4 shows an example of a WLAN communication according to an exemplary embodiment of the present invention.

Referring to FIG. 4, the STA transmits a data frame 410 to the AP through three transmission channels CH2, CH3 and CH4. Assume that the maximum transmission power is constrained to 40mW since adjacent channels are occupied by an incumbent user.

If the WS AP normally receives the data frame 410, an acknowledgement (ACK) frame is transmitted to the STA.

On the other hand, the AP may receive no data frame 410 because of the constrained transmission power. In other words, the data frame 410 may be missed during the transmission.

Due to the miss of the data frame 410, the AP cannot transmit the ACK frame and thus the STA cannot receive the ACK frame (420).

If there is no ACK frame received from the AP for a certain period of time, the STA can retransmit the data frame (430). Before retransmitting the data frame, random backoff may be performed for a certain period of time in order to use the frequency band.

In the case of retransmitting the data frame, the data frame may be transmitted by increasing the transmission power so that the AP can receive it. However, to prevent interference with the incumbent user, the bandwidth of the transmission channel is decreased. That is, a channel CH3 is used as the transmission channel except the channels CH2 and CH4 adjacent to the channels CH1 and CH 5 occupied by the incumbent user.

If the frame is retransmitted through the channel CH3, the AP can receive the retransmitted data frame and transmit the ACK frame to the STA (340).

To mitigate the interference with the incumbent user and more efficiently use the WS band, the STA needs to flexibly regulate the bandwidth of the transmission channel. Also, there is required a method of regulating the transmission power as well as the bandwidth of the transmission channel.

The present exemplary embodiment of the present invention provides a mechanism of regulating the bandwidth of the transmission channel used by the STA for transmitting the data frame.

Further, the present exemplary embodiment of the present invention may be applied to a method of transmitting or retransmitting the data frame by regulating the transmission bandwidth and/or the transmission power.

FIG. 5 is a flowchart showing a method of requesting a channel access according to an exemplary embodiment of the present invention. The STA 510 transmits a request-to-send (RTS) frame to the AP 520 in order to request a channel access (S510).

The RTS frame may include a transmission channel request field that contains information about requesting channels which are the transmission channel to be used by the STA 510 for transmitting the data frame. Each RTS frame can be transmitted over each requesting channel. The transmission channel request field includes information about the bandwidth of the requesting channel, and may further include information about the maximum transmission power when using a bandwidth of a relevant requesting channel.

The bandwidth of the requesting channel may be determined on the basis of a result from sensing a frequency band, performed by the STA 510, a database related to occupation of the incumbent user with regard to the relevant frequency band, or combination of the two sensing result and data base.

The AP 520 that receives the RTS frame determines whether requesting channel is available or not. A requesting channel can be available if the requesting channel is idle before receiving RTS frames. Or, requesting channel is available or not may be determined on the basis of a spectrum sensing result performed under an environment condition that priority over frequency occupation is given to an incumbent user.

The AP 520 transmits a clear to send (CTS) frame to the STA 510 in response to a request frame. The CTS frame may include a status code field that contains instruction information about whether to accept that the STA 510 uses the requesting channel bandwidth. In the case that the status code field instructs that the use of the requesting channel bandwidth is accepted, the STA 510 transmits the data frame to the AP 520 through the corresponding bandwidth.

CTS frame may include a field that contains responding information about a responding channel which is an available transmission channel. When the status code indicates that the requesting channel bandwidth is denied, information about a responding channel bandwidth may be include in CTS frame. Or, CTS frame may include information about transmission channel bandwidths which CTS frame can be transmitted over.The CTS frame can be transmitted in a bandwidth specified in the RTS frame. The responding channel can be among requesting channels. Accordingly, the bandwidth for the responding channel is narrower than the bandwidth for the requesting channels.

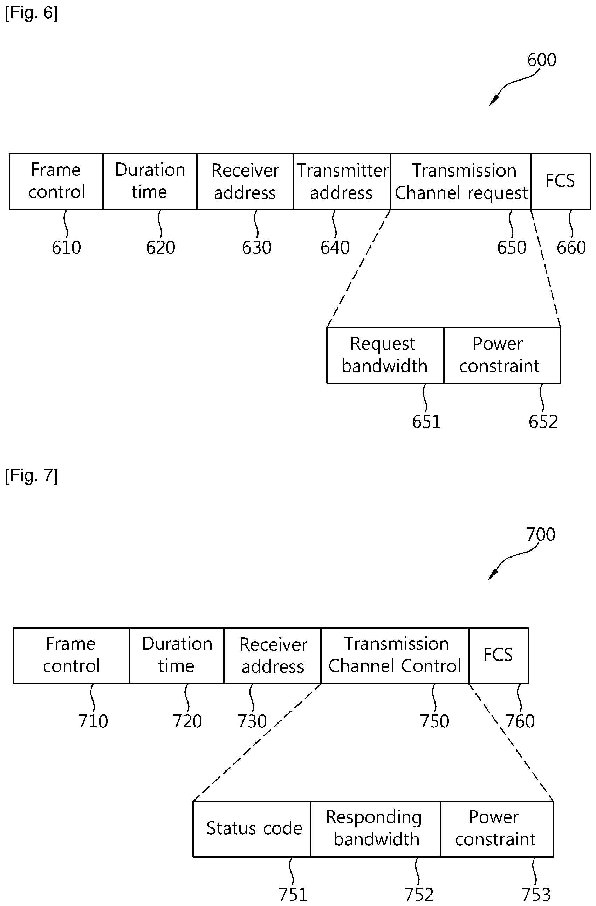

FIG. 6 shows the format of the RTS frame used in the exemplary embodiment of FIG. 5 by way of example.

The RTS frame 600 includes a frame control field 610 indicating a frame type, a duration time field 620 indicating time to use a wireless medium during the whole frame exchanging procedure, a receiver address field 630 indicating a medium access control (MAC) address of a wireless apparatus that receives the RTS frame 600, and a frame check sequence (FCS) field 660 used for detection and correction of an error that occurs when transmitting and receiving the frame. A transmitter address 640 indicates an MAC address of a wireless apparatus that transmits the RTS frame.

The RTS frame 600 includes a transmission channel request 650 indicating information about the requesting channel desired to be used by the STA 510. The transmission channel request field 650 may include a request bandwidth subfield 651 and a power constraint subfield 652.

The request bandwidth subfield 651 indicates the bandwidth of the requesting channel desired to be used. For example, let the RTS frame be transmitted over 4 requesting channels. If the bandwidth of each requesting channel is 20MHz, the request bandwidth subfield 651 indicates 80MHz. In the IEEE 802.11 WLAN system, a channel available to the wireless apparatus has four values of 5MHz, 10MHz, 20MHz or 40MHz, so that the bandwidth subfield 651 can have the size of 2bits. However, the size of the request bandwidth subfield 651 may vary depending on the bandwidth of the channel selectable by the wireless device. The AP 520 recognizes the bandwidth of the transmission channel indicated by the request bandwidth subfield 651 of the RTS frame 600 as a bandwidth desired to be used by the STA 510, and thus determines whether to accept the use of the corresponding bandwidth.

The power constraint subfield 652 indicates transmission power about the bandwidth indicated by the request bandwidth subfield 651 or requesting channels.

FIG. 7 shows the format of the CTS frame used in the exemplary embodiment of FIG. 5 by way of example.

The CTS frame 700 includes a frame control field 710, a duration time field 720, a receiver address field 730, an FCS field 760 and a WS control field 750.

The transmission channel control field 750 indicates control information about the responding channels available to the STA 510 or the responding channel over which the CTS frame can be transmitted. The transmission channel field 750 may include a status code subfield 751 denoting whether to accept the use of the requesting channels requested by the RTS frame 600, and a responding bandwidth subfield 752 indicating a bandwidth of the transmission channel recommended to be used by the STA 510.

If the status code subfield 751 indicates acceptance of the channels requested by the STA 510, it may be set up that the bandwidth indicated by the responding bandwidth subfield 752 is equal to the bandwidth indicated by the request bandwidth subfield 651.

The responding bandwidth subfield 752 indicates a bandwidth of an available responding channel. At this time, the recommended bandwidth subfield 752 may be set to indicate a bandwidth of 5MHz as a default value. Further, the responding bandwidth subfield 752 may indicate bandwidth about a plurality of channels.

The responding bandwidth subfield 752 may indicate a bandwidth of the responding channels over which the CTS frame 700 is transmitted. For example, it is assumed that two CTS frames are respectively transmitted over two responding channels and a bandwidth of each responding channel is 20MHz. The responding bandwidth subfield 752 may indicate 40MHz.

The transmission channel control field 750 may further includes a power constraint subfield 753 indicating available transmission power when the bandwidth, indicated by the responding bandwidth subfield 752, is used.

Thus, the STA 510 uses the status code subfield 751 for ascertaining whether the use of the frequency band is accepted or not when receiving the CTS frame 700 from the AP 520, and uses the corresponding frequency band if the use is accepted. If the status code subfield 751 indicates denial of the occupation request, the STA 510 uses another frequency bandwidth.

The STA 510 can use the bandwidth of the responding channels which CTS frame is received over.

For a time indicated by the duration time field 620 of the RTS frame 600, a network allocation vector (NAV) is set up with regard to the bandwidth indicated by the request bandwidth subfield 651 in the BSS where the STA 510 is involved. Likewise, for a time indicated by the duration time field 720 of the CTS frame 700, the NAV is set up with regard to the bandwidth indicated by the responding bandwidth subfield 752 in the BSS where the AP 520 is involved.

The transmission channel request field 650 and/or the transmission channel control field 750 may be achieved by not a separate field but utilizing reserved bits of the duration time fields 620 and 720. That is, most significant bits (MSB), i.e., 2 bits of a bit 14 and a bit 15 among 16 bits occupied by the duration time fields 620 and 720 are used for indicating the bandwidth for the plurality of requesting channels and total bandwidth for one responding channel or the responding channels, respectively. Accordingly, a request-response mechanism between the STA and the AP can be achieved with regard to the transmission channel to be used.

As opposed to the foregoing embodiment, the RTS frame and the CTS frame may be defined and used as a new management frame in the request-response frame transmitting/receiving mechanism between the STA 510 and the AP 520.

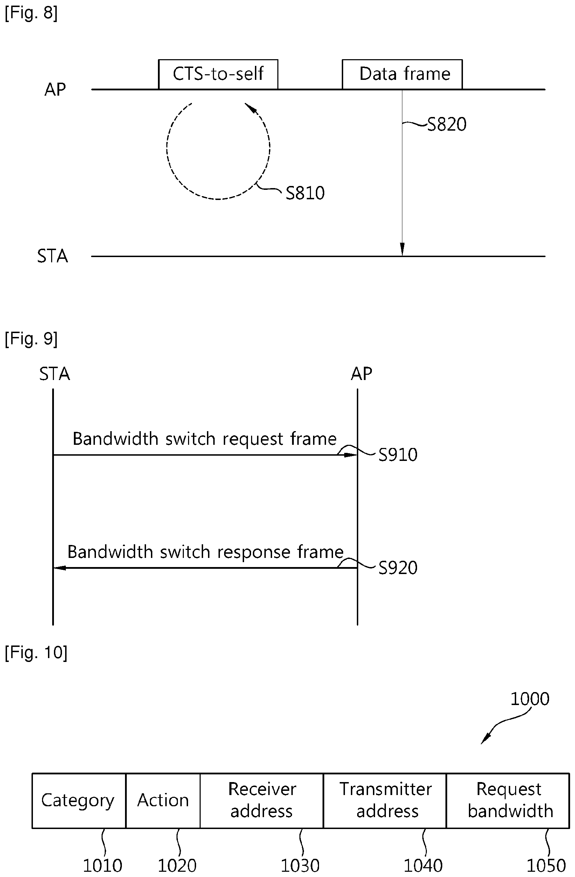

FIG. 8 shows a data frame transmitting method according to another exemplary embodiment of the present invention.

The CTS-to-self frame is the CTS frame 700 including the receiver address field 730 indicating an address of a device transmitting the CTS frame

If the AP transmits the data frame, the STA may receive the data frame on the basis of the channel bandwidth and power constraint involved in the transmission channel control field (S820).

The AP or the STA may regulate the bandwidth by transmitting the CTS-to-self frame even though there is no separate request.

FIG. 9 shows a data frame transmitting method according to still another exemplary embodiment of the present invention.

The STA transmits a bandwidth switch request frame for requesting a switch of the bandwidth (S910).

The AP transmits a bandwidth switch response frame in response to the bandwidth switch request frame (S920).

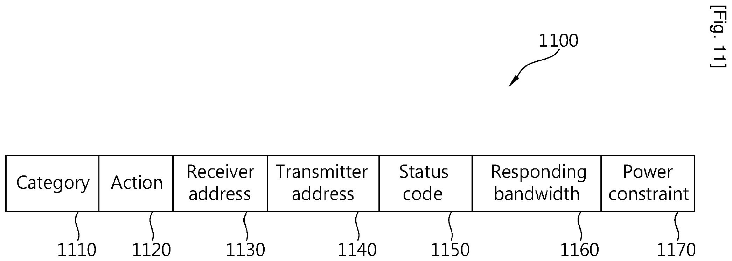

FIGs. 10 and 11 are block diagrams showing the formats of the bandwidth switch request frame and the bandwidth switch response frame.

The bandwidth switch request frame 1000 includes a category field 1010 indicating the type or name of a corresponding frame, an action field 1020 indicating an action of the corresponding frame, a receiver address field 1030 indicating the MAC address of the wireless apparatus that receives the frame, and a transmitter address field 1040 indicating the MAC address of the wireless apparatus that transmits the frame. The bandwidth switch request frame 1000 includes a request bandwidth field 1050 indicating a bandwidth of a transmission channel desired to be used by the STA. This is the same as the request bandwidth field 651 of the foregoing RTS frame 600, and thus repetitive descriptions thereof will be avoided.

The bandwidth switch response frame 1100 includes a category field 1110, an action field 1120, a receiver address field 1130, and a transmitter address field 1140. The bandwidth switch response frame 1100 may includes a status code field 1150 indicating whether the use of the transmission channel bandwidth indicated by the transmitted request bandwidth field 1050 is accepted, and a responding bandwidth field 1160 indicating a transmission channel bandwidth requested to be used by the STA 510.

Further, the bandwidth switch response frame 1100 may include a power constraint field 1170 indicating transmission power available for transmitting the data frame in the case where the bandwidth indicated by the recommended bandwidth field 1160 is used. The above three fields are the same as the status code subfield 751, the responding bandwidth subfield 752 and the power constraint subfield 753 of the foregoing CTS frame 700, respectively, and thus repetitive descriptions thereof will be avoided.

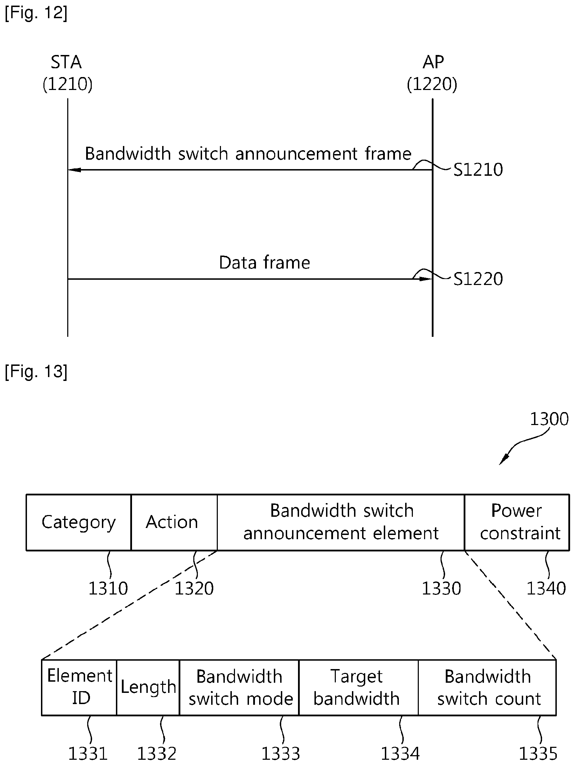

FIG. 12 is a flowchart showing a bandwidth regulating method according to another exemplary embodiment of the present invention.

The AP 1220 sends the STA 1210 a bandwidth switch announcement frame including information about a transmission channel bandwidth desired to be used (S1210). The STA 1210 transmits the data frame through the transmission channel bandwidth (S1220). FIG. 12 shows an example that the bandwidth switch announcement frame is transmitted by the AP 1220, but not limited thereto. Alternatively, STA 1210 may transmit the bandwidth switch announcement frame and the data frame.

FIG. 13 is a block diagram showing the format of the bandwidth switch announcement frame used in the exemplary embodiment of FIG. 12.

The bandwidth switch announcement frame 1300 includes a category field 1310 indicating the type or name of a corresponding frame, an action field 1320 indicating an action of the corresponding frame, a bandwidth switch announcement element field 1230 indicating a transmission channel bandwidth desired to be used, and a power constraint field 1340 indicating constraint of power to be used in the transmission channel bandwidth.

The bandwidth switch announcement element field 1330 includes an element ID subfield 1331 indicating that a corresponding field is a bandwidth switch announcement element field, a length subfield 1332 indicating the length of the bandwidth switch announcement element field 1330, a bandwidth switch mode subfield 1333 for signaling whether the action of the STA 510 that receives the bandwidth switch announcement frame is constrained or not, a target bandwidth subfield 1334 indicating the transmission channel bandwidth desired to be used, and a bandwidth switch count subfield 1335 indicating a time when the transmission channel bandwidth, indicated by the target bandwidth subfield 1334, is switched.

The bandwidth switch announcement frame 1300 transmitted from the AP 1220 to the STA 1210 may be defined as a separate management frame. Also, a beacon frame or a probe response frame may be employed as a bandwidth switch announcement frame 1300.

As well known, the beacon frame is cyclically broadcasted at beacon intervals. If the beacon frame is used, the transmission channel bandwidth may be regulated semi-statically within a transmission interval.

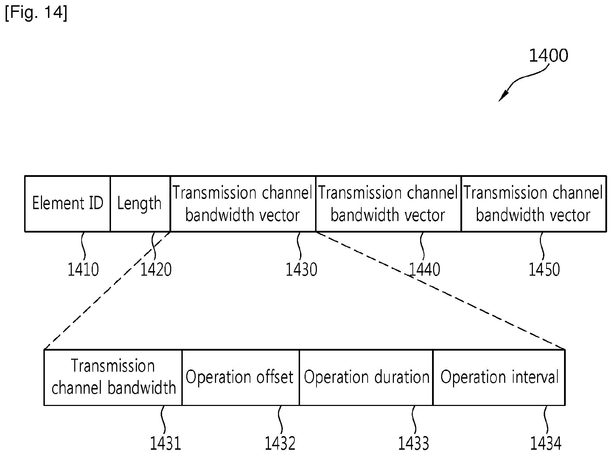

FIG. 14 shows an example of bandwidth management information included in the beacon frame.

The beacon frame includes a bandwidth switch field 1400. The bandwidth switch field 1400 includes an element ID field 1410 indicating bandwidth switch information, a length field 1420 indicating the length of the bandwidth switch field 1300, and at least one transmission channel bandwidth vector field 1430, 1440, 1450 indicating management information about each transmission channel. Here, the three transmission channel bandwidth vectors are included in the bandwidth switch field 1400, but not limited thereto. Alternatively, one or more than three transmission channel bandwidth vectors may be included in the bandwidth switch field 1400.

The transmission channel bandwidth vector field 1430 includes a transmission channel bandwidth subfield 1431, an operation offset subfield 1432, an operation duration subfield 1433, and an operation interval subfield 1434.

The transmission channel bandwidth subfield 1431 indicates a bandwidth of an available transmission channel bandwidth.

The operation offset subfield 1432 indicates a start time of operating in the corresponding bandwidth.

The operation duration subfield 1433 indicates a duration time of operating in the corresponding bandwidth.

The operation interval subfield 1434 indicates an interval at which a new operation duration is initiated again after the duration time of operating in the corresponding bandwidth is elapsed. One operation cycle is defined on the basis of the operation duration subfield 1433 and the operation interval subfield 1434.

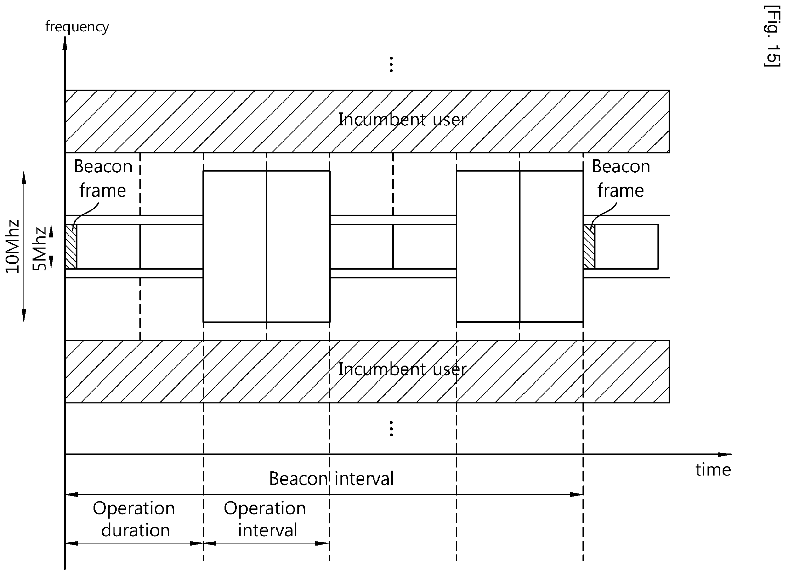

FIG. 15 shows an example of operation that can be performed in an exemplary embodiment of the present invention. For the convenience of the explanation, an operation in WS frequency band will be described by way of example. Let the maximum available transmission channel bandwidth be 10MHz in consideration of an incumbent user using opposite edges of unoccupied frequency band.

The beacon frame is cyclically transmitted, and includes the transmission channel bandwidth vector field 1430. The transmission channel bandwidth subfield 1431 of the transmission channel bandwidth vector field 1430 indicates a bandwidth of 5MHz.

After receiving the beacon frame, the operation duration of the STA is initiated using the bandwidth of 5MHz at a time indicated by the operation offset subfield 1432 within the transmission channel bandwidth vector field 1430.

The operation duration continues during the duration time of the operation duration subfield 1433, and the STA uses the bandwidth of 10MHz during the duration time indicated by the operation interval subfield 1434.

Bandwidth regulation is supported by a time division multiplexing (TDM) method within the beacon interval, and the beacon frame may be transmitted with the same bandwidth as the bandwidth indicated by the transmission channel bandwidth subfield 1431 of the transmission channel bandwidth vector field 1430 so as to transmit information about such transmission channel bandwidth regulation as being involved in the beacon frame.

In the meantime, even though the STA is signaled by the AP for information about the transmission power and the bandwidth of the transmission channel to be used for transmitting a data frame, i.e., a physical protocol data unit (PPDU), successful receipt of the AP has to be ensured by a higher level with respect to a specific portion of the data frame. That is, if a physical layer convergence procedure (PLCP) header of the PPDU frame transmitted by the AP and/or the STA is transmitted with low transmission power, another AP and/or STA at a coverage edge of the AP and/or the STA may not receive the corresponding PLCP header. Accordingly, the AP and/or the STA may not correctly perform channel clear assessment (CCA) detection.

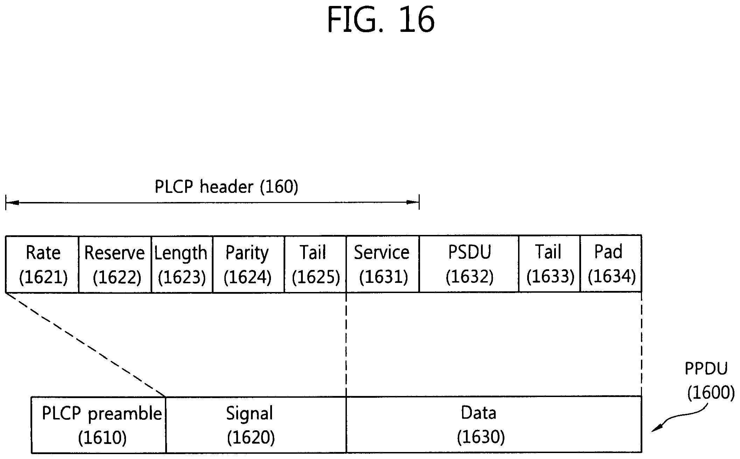

FIG. 16 shows a format of a PPDU frame in the WLAN, which may refer to a paragraph 17.3.2 of "Part 11: Wireless LAN Medium Access Control (MAC) and Physical Layer (PHY) specifications" in IEEE P802.11-2007.

A PPDU frame 1600 includes a physical layer control procedure (PLCP) preamble 1610, a signal field 1620, and a data field 1630.

The PLCP preamble 1610 includes a symbol of the PPDU frame, and a training sequence for timing synchronization.

The signal field 1620 includes a rate field 1621, a reserve field 1622, a length field 1623, a parity field 1624, and a tail field 1625 of the PLCP header 160. The signal field 1620 may be transmitted in one orthogonal frequency division multiplexing (OFDM) symbol.

The rate field 1621 indicates a data rate.

The length field 1623 may indicate a number of octets of a data field 1630, a PPDU frame 1630 to be transmitted, or a PSDU 1632 that the MAC layer currently requests the physical layer to transmit.

The parity field 1624 is a field indicating a parity bit for preventing an error of data.

The data field 1630 includes a service field 1631, a PSDU 1632 and a tail field 1633 of the PLCP header 160. Also, the data field 1630 may further include a padding field 1634 for padding the octet of the PPDU frame 1600. The service field 1631 is used for initializing a scrambler.

In the WLAN system, the frame transmitted and/or received by the STA and/or the AP has the foregoing form of the PPDU frame 1600. The PPDU frame 1600 is transmitted through a plurality of OFDM symbols.

As described above, even if a transmission channel bandwidth to be used in transmitting the data frame is signaled, the transmission power may be constrained when using the bandwidth. At this time, the STA and/or the AP may not receive the PLCP header (more specifically, a signal field on the structure of the PPDU frame). Accordingly, there is proposed a method of fully ensuring that the PLCP header is transmitted using a basic transmission channel (5MHz bandwidth) with the maximum transmission power in light of transmitting the data frame through the signaled transmission channel bandwidth

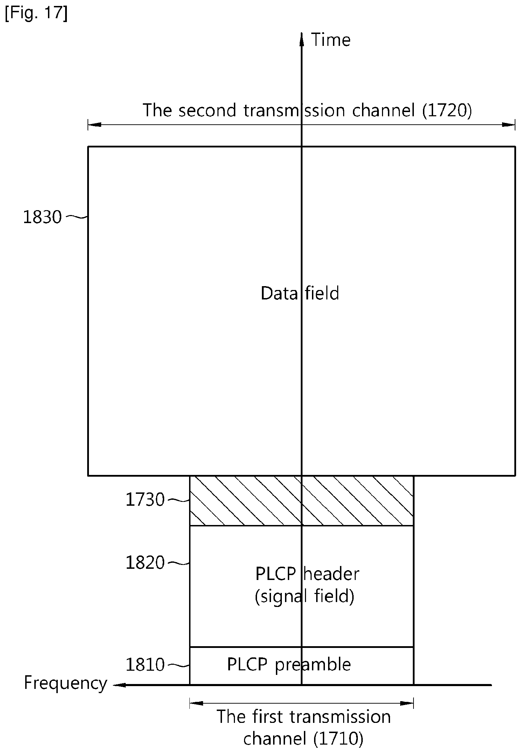

FIG. 17 shows a method of transmitting a data frame according to an exemplary embodiment of the present invention. Here, the data frame refers to a PPDU frame transmitted in the physical layer of the WLAN system.

The PLCP header and the data field of the PPDU frame may be transmitted using different transmission power in different frequency bands. Below, the frequency band used for transmitting the PLCP header will be called a first transmission channel 1710, and the frequency band used for transmitting the data field will be called a second transmission channel 1720.

The bandwidth of the first transmission channel 1710 is fixed, but the bandwidth of the second transmission channel 1720 is variable. The bandwidth of the first transmission channel 1710 may be narrower than that of the second transmission channel 1720. The bandwidth of the first transmission channel 1710 may be fixed to 5MHz, which is for fully ensuring the maximum transmission power in light of transmitting the PLCP header through the first transmission channel 1710.

The second transmission channel 1720 may have a specific bandwidth of the unoccupied frequency band announced through the DB access or the spectrum sensing result implemented by the STA or the AP.

The second transmission channel 1720 may have the bandwidth of the transmission channel signaled as described above with FIGs. 5 to 15.

Referring to FIGs. 5 to 7, in the case where the transmission channel bandwidth of the data frame is signaled by transmitting and receiving the RTS-CTS frames, if a status code 751 indicates admission, the bandwidth of the second transmission channel may be a bandwidth indicated by a request bandwidth subfield 651 of the transmission channel request field 650. If the status code 751 indicates refusal, the bandwidth of the second transmission channel may be a bandwidth indicated by the responding bandwidth subfield 752 of the transmission channel control field 750.

Referring to FIG. 8, a bandwidth indicated by the transmission channel control field of a CTS-to-Self frame may be used as the bandwidth of the second transmission channel.

Referring to FIGs. 9 to FIG. 11, in the case where the transmission channel bandwidth is signaled by transmitting and receiving a bandwidth switch request frame and a bandwidth switch response frame, if a status code 1150 indicates acceptance, the bandwidth of the second transmission channel may be a bandwidth indicated by a request bandwidth field 1050. If the status code 1150 indicates refusal, the bandwidth of the second transmission channel may be a bandwidth indicated by responding bandwidth field 1160.

Referring to FIGs. 12 and 13, if the transmission channel bandwidth is signaled by transmitting a bandwidth switch announcement frame, the bandwidth of the second transmission channel may be a bandwidth indicated by a target bandwidth subfield 1334.

Referring to FIGs. 14 and 15, if the transmission channel bandwidth is signaled by a beacon frame including a channel bandwidth vector field, the bandwidth of the second transmission channel may be a bandwidth indicated by each channel bandwidth sub field of the bandwidth vector fields 1430, 1440 and 1450.

Referring to FIG. 17, the STA and/or the AP transmits a PLCP preamble 1810 and a PLCP header 180 (more specifically, a signal field 1820) through a first transmission channel 1710 having a bandwidth of 5MHz with respect to a center frequency f_{c}.

A data field 1830 is transmitted through a second transmission channel 1720 having a bandwidth equal to or wider than that of the first transmission channel 1710. The bandwidth of the second transmission channel 1720 may have 5MHz, 10MHz, 20MHz or more, which are all multiples of 5.

Although the STA and/or the AP can use a higher bandwidth, the bandwidth used in transmitting the PLCP header 180 is limited to the bandwidth of 5MHz. This is to guarantee successful receipt of a receiver by transmitting the PLCP header 180 with power as high as possible

Because the first transmission channel 1710 and the second transmission channel 1720 are different in the bandwidth, they may also be different in the transmission power. For example, while the transmission power for the PLCP header 180 is 100mW, the transmission power for the data field 1830 may be 40mW.

If a receiver is placed at a coverage edge of a transmitter, the receiver can receive the PLCP header 180 but cannot receive the data field 1830 since no signal is sensed in the channel. Although no signal is sensed, the receiver can determine that the second transmission channel 1720 is being occupied, on the basis of the frame length information of the PLCP header 180.

A transition gap 1730 may be provided between the PLCP header 180 and the data field 1830. Since a sampling frequency and a sampling rate are changed between the first transmission channel 1710 and the second transmission channel 1720, the transition gap 1730 is provided for allowing a receiver to be tuned to a widened bandwidth. If the receiver is operated at the sampling rate supported as highest as possible, there may be no need of such a transition gap.

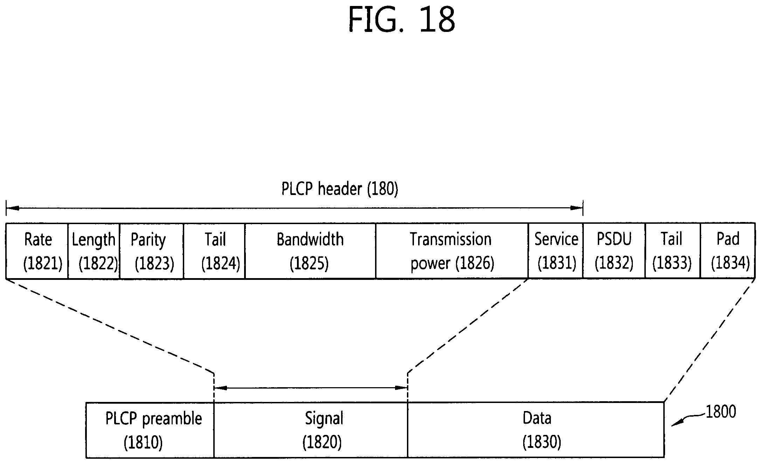

FIG. 18 is a block diagram showing the format of the PPDU frame according to an exemplary embodiment of the present invention.

The PPDU frame 1800 includes a PLCP preamble 1810, a signal field 1820, and a data field 1830.

The PLCP preamble 1810 is used for synchronization. In the WLAN system, the PLCP preamble 1810 includes twelve OFDM symbols for various timer synchronizations between the transmitter and the receiver. Among them, ten symbols are short training symbols, and the other two symbols are long training symbols.

The signal field 1820 includes a rate field 1821, a length field 1822, a parity field 1823, a tail field 1824, a bandwidth field 1825, and a transmission power field 1826 of the PLCP header 180.

The rate field 1821, the length field 1822, the parity field 1823 and the tail field 1824 have the same functions as the fields 1621, 1623, 1624 and 1625 of FIG. 16, respectively.

The bandwidth field 1825 shows the bandwidth of the second transmission channel 1720. If the bandwidth of the second transmission channel 1720 i.e., the transmission bandwidth for the data field 1830 is signaled to the PLCP header 180, sub-carrier spacing of the PSDU 1832 is determined on the basis of this signaling information.

The transmission power field 1826 shows a transmission power constraint of when the second transmission channel 1720 is used. The maximum transmission power value indicated by the transmission power field 1826 may be the maximum transmission power indicated by the power constraint sub-fields 652, 753 and the power constraint fields 1170 and 1340 of the exemplary embodiments as described above with reference to FIGs. 5 to 15.

The data field 1830 includes a service field 1831, a PSDU 1832, a tail field 1833 and a pad field 1834 of the PLCP header 180. Here, the tail field 1833 and the pad field 1834 have the same functions as the tail field 1633 and the padding field 1634 of FIG. 16, respectively.

The data field 1830 is encoded in accordance with a data rate and scrambled before being transmitted.

The service field 1831 is included in the PLCP header 180, but transmitted as being included in the data field 1830 of the PPDU frame 1800 when transmitted. This is to initialize the scrambler.

The format of the PPDU frame 1800 is nothing but an example. The name or location of each field may be changed. Also, a certain field of the PPDU frame 1800 may be omitted, and another field may be added.

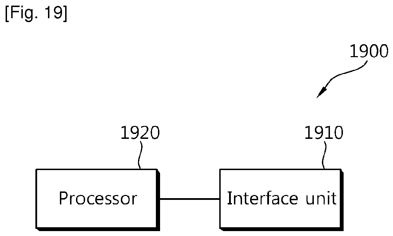

FIG. 19 is a block diagram of a wireless device to implement the present invention. The wireless device 1900 may be a part of a STA or an AP or may be a part of a transmitter or a receiver.

The wireless device 1900 includes an interface unit 1910 and a processor 1920.

The interface unit 1910 is operatively coupled with the processor 1920 and provides a wireless interface with other wireless device. The processor 1920 implements functions of the STA or AP shown in embodiments of FIGs. 2, 5, 8, 9 and 12. The processor 1920 may perform the bandwidth adaptation.

The processor may include application-specific integrated circuit (ASIC), other chipset, logic circuit and/or data processing device. The memory may include read-only memory (ROM), random access memory (RAM), flash memory, memory card, storage medium and/or other storage device. When the embodiments are implemented in software, the techniques described herein can be implemented with modules (e.g., procedures, functions, and so on) that perform the functions described herein. The modules can be stored in memory and executed by processor. The memory can be implemented within the processor or external to the processor in which case those can be communicatively coupled to the processor via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method of requesting a channel access in a wireless local area network, comprising:
transmitting (S510), by a transmitter, a plurality of 20MHz Request To Send, RTS, frames over a plurality of requesting channels, wherein each 20MHz RTS frame is transmitted over each requesting channel, wherein a bandwidth of each requesting channel is set to 20MHz; and
receiving (S520), by the transmitter, a 20MHz Clear To Send, CTS, frame over a responding channel as a response to the plurality of 20MHz RTS frames, wherein each of the plurality of 20MHz RTS frames includes a request bandwidth field indicating an entire bandwidth of the plurality of requesting channels.

2. The method of claim 1, wherein the request bandwidth field indicates 20xn MHz, where n is a positive number of the plurality of requesting channels.

3. The method of claim 2, wherein n is 2, 4 or 8.

4. A device (1900) configured to request a channel access in a wireless local area network, comprising:
an interface unit (1910) providing a wireless interface; and
a controller (1920) operatively connected to the interface unit (1910) and configured to:
instruct the interface unit (1910) to transmit a plurality of 20MHz Request To Send, RTS, frames over a plurality of requesting channels, wherein each 20MHz RTS frame is transmitted over each requesting channel, wherein a bandwidth of each requesting channel is set to 20MHz, and
instruct the interface unit (1910) to receive a 20MHz Clear To Send, CTS, frame over a responding channel as a response to the plurality of 20MHz RTS frames, wherein each of the plurality of 20MHz RTS frames includes a request bandwidth field indicating an entire bandwidth of the plurality of requesting channels.

5. The device (1900) of claim 4, wherein the request bandwidth field indicates 20xn MHz, where n is a positive number of the plurality of requesting channels.

6. The device (1900) of claim 5, wherein n is 2, 4 or 8.

## Patentansprüche

1. Verfahren zur Anfrage eines Kanalzugangs in einem drahtlosen lokalen Netzwerk, umfassend:
Senden (S510) einer Mehrzahl von 20-MHz-Request-to-Send-Frames, 20-MHz-RTS-Frames, über eine Mehrzahl von anfragenden Kanälen durch einen Sender, wobei jeder 20-MHz-RTS-Frame über jeden anfragenden Kanal gesendet wird, wobei eine Bandbreite jedes anfragenden Kanals auf 20 MHz eingestellt ist; und
Empfangen (S520) eines 20-MHz-Clear-to-Send-Frames, 20-MHz-CTS-Frames, über einen antwortenden Kanal als Antwort auf die Mehrzahl von 20-MHz-RTS-Frames durch den Sender, wobei jeder der Mehrzahl von 20-MHz-RTS-Frames ein Anfragenbandbreite-Feld umfasst, das eine gesamte Bandbreite der Mehrzahl von anfragenden Kanälen angibt.

2. Verfahren nach Anspruch 1, wobei das Anfragenbandbreite-Feld 20 x n MHz angibt, wobei n eine positive Zahl der Mehrzahl von anfragenden Kanälen ist.

3. Verfahren nach Anspruch 2, wobei n 2, 4 oder 8 ist.

4. Vorrichtung (1900), die dazu konfiguriert ist, einen Kanalzugang in einem drahtlosen lokalen Netzwerk anzufragen, umfassend:
eine Schnittstelleneinheit (1910), die eine drahtlose Schnittstelle bereitstellt; und
einen Controller (1920), der funktionsfähig mit der Schnittstelleneinheit (1910) verbunden ist und konfiguriert ist zum:
Anweisen der Schnittstelleneinheit (1910), eine Mehrzahl von 20-MHz-Request-to-Send-Frames, 20-MHz-RTS-Frames, über eine Mehrzahl von anfragenden Kanälen zu senden, wobei jeder 20-MHz-RTS-Frame über jeden anfragenden Kanal gesendet wird, wobei eine Bandbreite jedes anfragenden Kanals auf 20 MHz eingestellt ist, und
Anweisen der Schnittstelleneinheit (1910), einen 20-MHz-Clear-to-Send-Frame, 20-MHz-CTS-Frame, über einen antwortenden Kanal als Antwort auf die Mehrzahl von 20-MHz-RTS-Frames zu empfangen, wobei jeder der Mehrzahl von 20-MHz-RTS-Frames ein Anfragenbandbreite-Feld umfasst, das eine gesamte Bandbreite der Mehrzahl von anfragenden Kanälen angibt.

5. Vorrichtung (1900) nach Anspruch 4, wobei das Anfragenbandbreite-Feld 20 x n MHz angibt, wobei n eine positive Zahl der Mehrzahl von anfragenden Kanälen ist.

6. Vorrichtung (1900) nach Anspruch 5, wobei n 2, 4 oder 8 ist.

## Revendications

1. Procédé de demande d'un accès à un canal dans un réseau local sans fil, comprenant :
émettre (S510), par un émetteur, une pluralité de trames de demande d'émission, RTS, de 20 MHz sur une pluralité de canaux de demande, chaque trame RTS de 20 MHz étant émise sur chaque canal de demande, une bande passante de chaque canal de demande étant réglée à 20 MHz ; et
recevoir (S520), par l'émetteur, une trame « prêt à émettre », CTS, de 20 MHz sur un canal de réponse en tant que réponse à la pluralité de trames RTS de 20 MHz, chacune de la pluralité de trames RTS de 20 MHz comprenant un champ de bande passante de demande indiquant une bande passante entière de la pluralité de canaux de demande.

2. Procédé selon la revendication 1, dans lequel le champ de bande passante de demande indique 20 x n MHz, n étant un nombre positif de la pluralité de canaux de demande.

3. Procédé selon la revendication 2, dans lequel n est 2, 4 ou 8.

4. Dispositif (1900) configuré pour demander un accès à un canal dans un réseau local sans fil, comprenant :
une unité d'interface (1910) fournissant une interface sans fil ; et
un dispositif de commande (1920) connecté de manière fonctionnelle à l'unité d'interface (1910) et configuré pour :
donner l'instruction à l'unité d'interface (1910) d'émettre une pluralité de trames de demande d'émission, RTS, à 20 MHz sur une pluralité de canaux de demande, chaque trame RTS de 20 MHz étant émise sur chaque canal de demande, une bande passante de chaque canal de demande étant réglée à 20 MHz, et
donner l'instruction à l'unité d'interface (1910) de recevoir une trame « prêt à émettre », CTS, de 20 MHz sur un canal de réponse en tant que réponse à la pluralité de trames RTS de 20 MHz, chacune de la pluralité de trames RTS de 20 MHz comprenant un champ de bande passante de demande indiquant une bande passante entière de la pluralité de canaux de demande.

5. Dispositif (1900) selon la revendication 4, dans lequel le champ de bande passante de demande indique 20 x n MHz, n étant un nombre positif de la pluralité de canaux de demande.

6. Dispositif (1900) selon la revendication 5, dans lequel n est 2, 4 ou 8.
